Europäisches Patentamt

⑩ ))) European Patent Office

Office européen des brevets

(11) Publication number: **0 121 619**
**B1**

(12) **EUROPEAN PATENT SPECIFICATION**

(45) Date of publication of patent specification: **02.03.88**

(21) Application number: **83301999.5**

(22) Date of filing: **08.04.83**

(51) Int. Cl.⁴: **F 16 B 37/08, F 16 B 35/04**

(54) Screw couplings.

(43) Date of publication of application:
17.10.84 Bulletin 84/42

(45) Publication of the grant of the patent:
02.03.88 Bulletin 88/09

(84) Designated Contracting States:
**BE DE FR GB NL**

(56) References cited:
**FR-A-1 076 116
FR-A-2 184 303
US-A-1 890 663
US-A-3 023 797
US-A-3 842 877**

(73) Proprietor: **Yasui, Masayuki**
**29 Kagura-Machi**
**1-Chome Kuwana-Shi Mie-Ken (JP)**
(73) Proprietor: **Yasui, Yasuko**
**29 Kagura-Machi**
**1-Chome Kuwana-Shi Mie-Ken (JP)**
(73) Proprietor: **Kamiyoshi, Yusuke**
**1-14 Sugano 6-Chome Ichikawa-Shi,**
**Chiba-Ken (JP)**

(72) Inventor: **Yasui, Masayuki**
**29 Kagura-Mechi**
**1-Chome Kuwama-Shi Mie-Ken (JP)**
Inventor: **Yasui, Yasuko**
**29 Kagura-Mechi**
**1-Chome Kuwama-Shi Mie-Ken (JP)**

(74) Representative: **Evans, David Charles et al**
**F.J. CLEVELAND & COMPANY 40-43, Chancery**
**Lane**
**London, WC2A 1JQ (GB)**

EP 0 121 619 B1

# Description

The present invention relates to screw couplings which comprise a male and a female member relatively rotatable for interengagement. Each member has a suitable number of partial threads and grooves and also has a suitable number of non-threaded and non-grooved portions between the ends of the threads and the grooves. These non-threaded and non-grooved portions of one of the members can freely pass the respective grooves and threads of the other. Stopper means keeps the members engaged; preventing further relative rotation of the members. Each of the members is suitably connected to each article. When these members are relatively screwed in or back, each article can be connected or disconnected.

Bolts and nuts heretofore in use are provided with a thread or threads of very short pitch. In a long pitch thread there is insufficient friction to keep bolts and nuts engaged while relative rotation is effected. Therefore, to engage bolts and nuts by relative rotation it is necessary to rotate them many times.

This invention relates to screw couplings comprising a male and a female member which are provided with a non-threaded portion between the ends of a partial thread in parallel with the axial line, which can pass a cooperative thread of the other. When the threads of the members meet with the non-threaded portions respectively, the members can freely relatively move to engage and disengage with each other in the same axial line.

An object of this invention is to provide a fastening device wherein the relative upward or downward positions of interlocking male and female members can be readily adjusted; wherein readjustment can readily take place in response to the effects of wear or vibration, and wherein forcing the male member into the female member during fastening is substantially obviated.

US—A—1890663 provides a slip bushing which has a self-contained elliptical lock between the liner thereof and the said bushing. The lock is effective when a bushing is inserted in a co-operating liner and twisted to a desired angle so the elliptical lock on the bushing engages with the corresponding cavity in the liner. No screw-thread is involved.

US—A—3,023,797 provides an interrupted thread bolt and bushing with stop and radially sliding lock means. In particular there is provided a screw coupling comprising a generally cylindrical male member provided with a plurality of partial screw threads thereupon, a generally cylindrical female member provided with a plurality of co-operating partial screw threads thereon, a longitudinal land formed between each of the partial screw threads of the male and female members to provide means whereby the male and female members can be slid axially into co-operation, and stop means to prevent relative rotational movement beyond a desired amount.

The present invention is characterized in that urging means are provided to urge the male and female members axially apart.

Accompanying drawings show embodiments of the present invention by way of illustration only in which:—

Figure 1 is a side view wherein a male and a female member are engaged and the female member is in section,

Figure 2 is a plan view of the male member,

Figure 3 is a bottom view of the female member,

Figure 4 is a partial side view of another embodiment of the invention wherein a female member is in section,

Figure 5 is a partially cut off side view of a female member which is provided with guide planes at the corners of the beginning of screwing engagement of grooves,

Figure 6 is a side view partially in section of further embodiment of the invention wherein members are engaged,

Figure 7 is a side view of further embodiment of the invention wherein members are engaged and a female member is in section,

Figure 8 is illustrations of three types of developed spiral threads or grooves, the shapes of each end plane of which are shown hatched,

Figure 9 through Figure 12 are partial side elevations which show different embodiments of arrangement of a groove or grooves and a thread or threads, in the states of the members being in engagement and of the female member being in section,

Figure 13 through Figure 15 are partial sectional side elevations of the female members which show different embodiments of grooves provided with at least a guide for engagement,

Figure 16 is a partially sectioned side view of further embodiment of the invention, in which a male and a female member are engaged, and

Figure 17 through Figure 22 are illustrations of different uses of the screw couplings of the present invention.

The embodiments of the invention are hereinafter detailed with reference to the drawings. Throughout the description and the drawings, the same symbols designate the same or the similar portions.

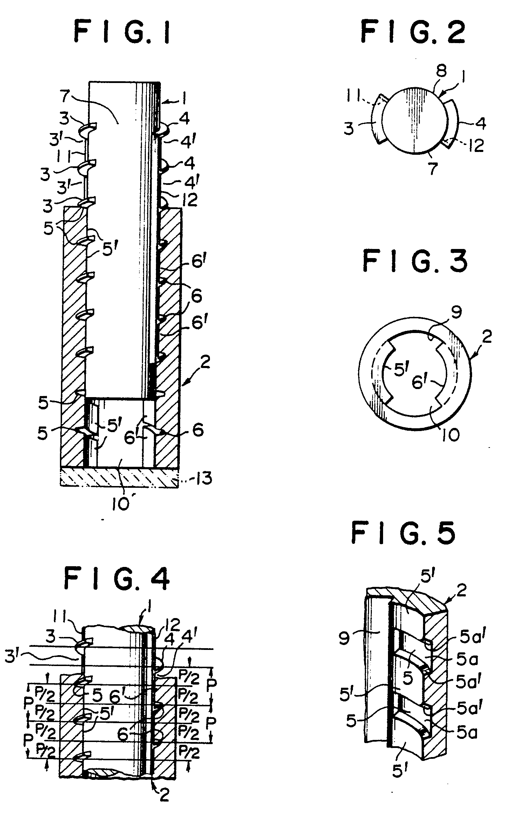

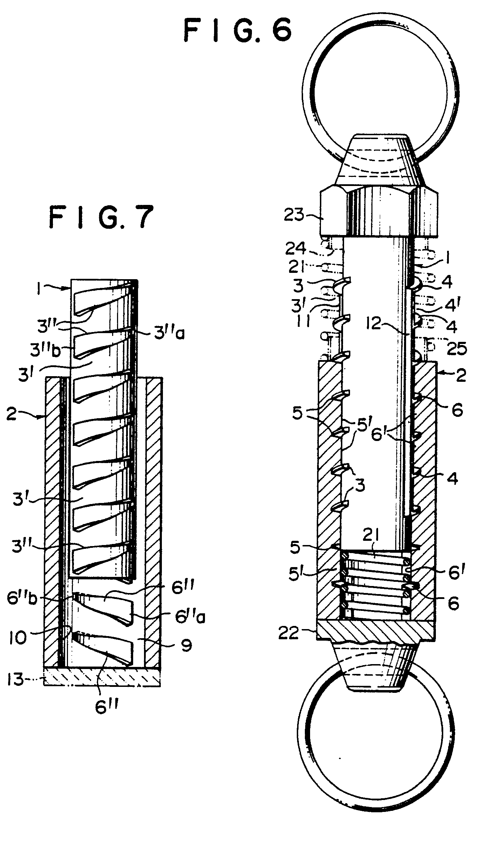

In Figures 1 to 3, a male member is provided with two partial spiral threads 3 and 4 and grooves 3' and 4' which are provided in an equal length and at an equal inclined angle around the member 1; and in two lines parallel with the axial line of the member 1. A female member 2 is provided with two partial spiral grooves 5 and 6 and threads 5' and 6' cooperative with the threads 3 and 4 and the grooves 3' and 4', respectively. The members 1 and 2 come into rotational engagement each other with their threads and grooves. These threads and grooves 3, 3' and 4, 4' of the member 1 and 5, 5' and 6, 6' of the member 2 are located in each position free from mutual interference in each plane crossing at a right angle to each axial line. Between the ends of the threads and the grooves 3, 3' and 4, 4' and 5, 5' and 6, 6', non-threaded portions 7 and 8 and non-grooved portions 9 and 10 are formed, respectively. By making the central angles formed by the non-threaded and the non-grooved portions in a cross-section of the female member 2 larger than those of co-operative threads 3 and 4, it is easy to interrelate the members 1 and 2, so that they interengage and disengage freely. The number and the position in a cross-section of threads and grooves are suitably settled in accordance with use. Stoppers 11 and 12 are provided at the end portions in the engaging direction of the grooves 3' and 4' of the male member 1. The stoppers are intended to stop relative rotation of the members 1 and 2 at a desired point by contact of the beginning end of the threads 5' and 6' in the direction of inter-engagement with the stoppers 11 and 12, when tensile force acts between the male and female member 1 and 2. Of course, the stoppers may be provided at the terminal portions of the grooves 5 and 6 of the female member 2 in the direction of screwing engagement. A shutting portion 13 for the lower opening of the female member may optionally be provided. Further, the stoppers 11 and 12 may be substituted by the inclined planes as shown in Figure 7.

Figure 4 shows an example in which the position of the screwing engagement of the male and the female members in the axial direction is adjustable. The setting positions of the threads and grooves 3, 3', 4, 4' and 5, 5', 6, 6' are shifted in circular order toward the axial line every one-to-two pitches in the case of two lines as shown in Figure 4, and every one-to-three pitches in the case of three lines. Accordingly, in the example shown in Figure 4, the relative position of the male and the female members 1 and 2 in the axial direction can be adjusted by one-to-two pitch, re-screwing the members into engagement after relatively rotating the members at an angle of 180° and shifting them a little toward the axial direction. Of course, larger adjustment than that is possible. This arrangement is so planned as to fully bear a large load.

Figure 5 shows guide planes 5a' formed to introduce smoothly each end of the threads 3 or 4 of the male member 1, at the corner portions of the end portions 5a on the sides of the beginning of screwing engagement of grooves 5 of the female member. The guide planes 5a' may be provided at the similar corner portions of the male member 1.

Figure 6 shows the location of an urging means. Between both the members 1 and 2 an urging means 21 is located which urges the stoppers 11 and 12 toward their respective ends in the direction of screwing engagement. This may be between the lower ends of the grooves 5' and 6' of the female member 2. The urging means 21 is preferably located so as to have the lower end supported by a support 22 such as a protrusion or a bottom cap and to have the upper end contacted with the lower end of the male member 1; or may be located between the upper end of the female member 2 and a support 23 provided at the upper end of the male member 1. In the latter case, if guides 24 and 25 are suitably provided, interferences between the means 21 and the threads 3 and 4 can be stopped.

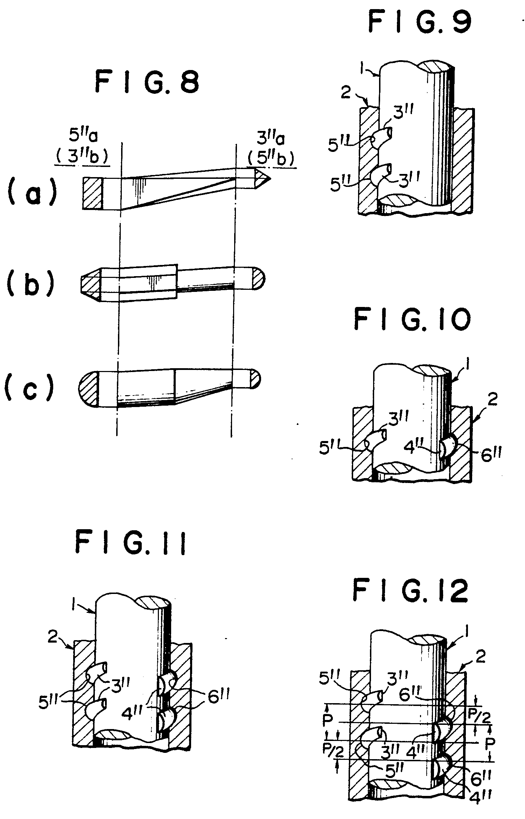

Figure 7 shows an example, in which by varying sectional shapes of the threads and grooves engaging each other, sectional variations are made to act as stoppers. Sections of a co-operative thread and groove for screwing engagement of both the members 1 and 2 such as 3'' and 5'' (in Figure, 6'' only are visible) vary from the beginning 3''a and 5''a (6''a) to the ends 3''b and 5''b (6''b) of screwing engagements. The embodiments of the variations comprise, as shown in Figure 8, (a) a continuous type, (b) an intermittent type and (c) a connection type of the continuous and the intermittent types. The sectional shapes also comprise special types (a) and (b) and a reductive type (c). The variations are from large to small sizes in the grooves 5'' case and from small to large sizes in the threads 3'' case. During inter-engagement the sectional variations of threads 3'' and the grooves 5'' act substantially as stoppers, and the engagement of the male and female members 1 and 2 is satisfactorily achieved.

Figure 9 shows an arrangement of spiral grooves and threads in the axial directions aligned sequentially by providing a plurality of co-operative grooves 5'' and threads 3'' of the same variation in section, for screwing engagement. A relative upward and downward adjustment of the male and female members 1 and 2 can thus be readily achieved.

Figure 10 shows an arrangement of spiral grooves 5'' and 6'' and threads 3'' and 4'' in each axial direction, aligned in two lines or more and equally spaced around each center. The threads and grooves in each plane cross at a right angle to each axial line of the fellow spiral grooves 5'' and 6'' or threads 3'' and 4''. At a minimum at least a groove 5'' and a thread 6'' are provided. The members 1 and 2 can thus be screwed into engagement without regulation of a relative position in a horizontal plane.

Figure 11 shows an arrangement of spiral grooves 5'' and 6'' and threads 3'' and 4'' in axial direction of each member 2 or 1. The threads or grooves are aligned in two or more lines equally spaced around each center, and in each plane crossing at a right angle to each axial line of two respective fellow grooves 5'' and 6'' and thread 3'' and 4''. Two or more respective grooves and threads are provided in a line and the sectional variations of them are the same with the sectional variations of all the co-operative grooves and threads for screwing engagement. Both relative positions of the members 1 and 2 in the upward and the downward directions and in a horizontal plane can freely be adjusted.

In the case of Figure 12, spiral grooves 5'' and 6'' and threads 3'' and 4'' are arranged in two lines in parallel with each axial line at an equal central angle. Sectional variations of the grooves 5'' and 6'' and the threads 3'' and 4'' are the same with sectional variations of all of the co-operative grooves and threads for screwing engagement. The setting positions of the grooves or the threads in each line are shifted in circular order toward the axial line every one-to-two pitch. By varying the engagements of the grooves and the threads in the direction of rotation in a horizontal plane, the pitch of adjustment in the axial direction can be finely adjusted. If there are lines of the number of *n*, it may be adjusted every one-to-*n* pitch.

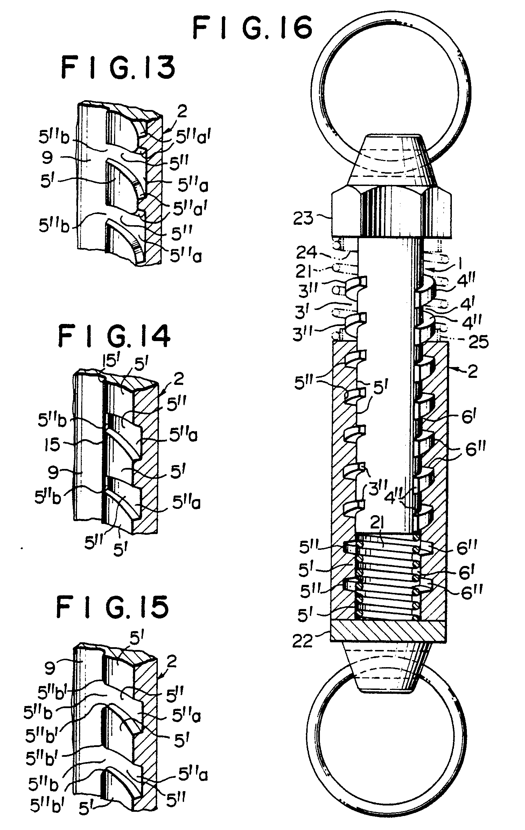

Figure 13 shows the female member 2 with grooves 5'' presenting sectional variations. At the beginning 5''a of the grooves 5'' for inter-engagement, guide planes 5''a' are formed to have the ends of the threads 3 or 4 of the male member engaging with the female member 2 smoothly screwed in. The guide planes 5''a' may be formed at the same beginnings of the male member 1.

Figure 14 also shows the female member 2 with the grooves 5'' presenting sectional variations. In relation to the end planes 5''b of the grooves 5'' for screwing engagement, a guide 15 whose outer plane presents a guide plane 15' continuing in the axial direction is formed. When the members 1 and 2 are relatively fitted in or drawn out, if the facing planes of the ends 3''b and/or 4''b in the direction of screwing engagement of the threads 3'' or 4'' of the male member 1 are contacted with the guide plane 15' of the female member 2, they can be smoothly fitted in and drawn out without being caught. Of course, the guide 15 may be provided in relation to the ends 3''b and 4''b in the direction of screwing engagement or to both the members.

Figure 15 shows an arrangement similar to that of Figure 14. Bevelled portions 5''b' are provided at the end portions 5''b in the direction of screwing engagement of the grooves 5'' of the female member 2.

Figure 16 shows a screw coupling coordinate with Figure 7 provided with an urging means coordinate with Figure 6. As the function and the effect of this embodiment will be easily appreciated from the descriptions on the embodiments shown in each drawing, an explanation is omitted.

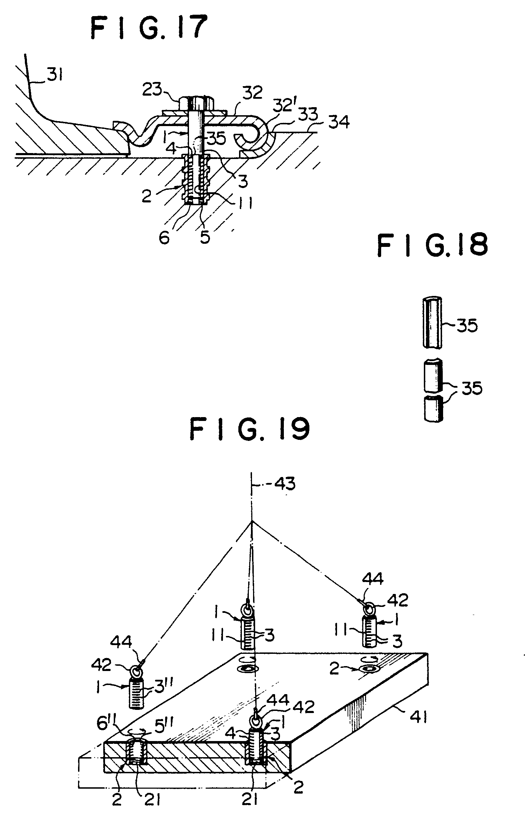

Figure 17 shows how to use the screw couplings as described. As there are not so many differences in use between the sectional variations and the non-sectional variations, both the cases are described inclusively.

Figure 17 and 18 shows the use of a fastening device for a rail. 31 is a rail, 32 is a leaf spring, 33 is a spring support, 34 is a tie and 35 are plugs. The female member 2 is buried in the tie, and the male member 1 with the head 23 is fitted positively in the female member 2 in a mutually free position through the leaf spring 32. When the male member 1 is screwed back, the male member 1 is stopped at a certain position by the reaction of the leaf spring 32. Therefore, a planned fastening force by the leaf spring 32 can be achieved. As the upward and the downward positions of the male member can freely be adjusted, if it becomes short of the fastening force caused by wear or vibration, it may be adjusted as occasion requires. Where a planned fastening force is required, it is not necessary to force the male member toward the female member. This is because of the reaction of the leaf spring 32 on the support 33, the reaction being yielded by the action of the rolled portion 32' of the leaf spring 32 by means of the head 23. Thus, the difficulty of pressing the male member 1 is avoided. If there are any regulations in the direction or on the depth of insertion, the embodiments shown in Figures 4, 9, 11 and 12 are adoptable. Further, when the plugs 35 are forced in the spaces formed by the non-grooved and the non-threaded portions 7, 8, 9 and 10 of the members 1 and 2, reversion of the member 1 can more surely be checked.

Figure 19 shows the lifting of a concrete member. The female members 2 are buried in suitable positions in a concrete member 41 and the male members 1 are fitted positively to each female member 2 and screwed for engagement. When a lifting wire rope 43 is lifted, hooks 44 of the lifting wire rope 43 are engaged with rings 42. The male members 1 stop at a certain position and the concrete member 41 can thus be easily lifted. Urging means 21 are present so as to avoid having to check engagement of every union before lifting is commenced.

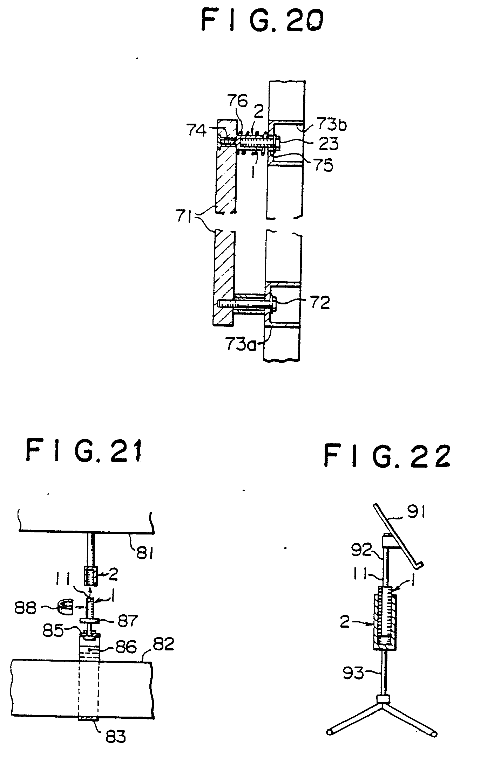

Figure 20 shows an example used as an anchor for a panel of outer wall of a building. A panel 71 is fixed at its lower portion by a bolt 72 with respect to a beam 73a. The panel 71 is also loosely fixed at its upper portion with respect to a beam 73b, in such a manner as hereinafter described. The female member 2 is provided directly or by means of a female screw 74 to anchor the upper portion of the panel 71. The male member 1 with the support 23 is inserted in the female member 2 through a hole 75 of the beam 73b and then the male member 1 is screwed back till it stops at a certain position for engaging the female member 2. Thus, a loose fixing of the panel 71 is made. A resilient means 76 which restricts the panel from easily moving is located with respect to the beam 73b and the panel 71.

Figure 21 shows the use of a screw coupling as a hanger for a duct. The female member 2 is fixed onto a ceiling 81. A hanger 83 connects a duct 82 to a metal frame 85 of a channel member by a bolt 86. The metal frame 85 holds the male member 1 rotatably at a certain position. The member 1 is inserted into the female member 2 from the bottom thereof and screwed to engage. These members 1 and 2 are engaged at a certain position under the load of the duct 82, and the duct 82 is hung thereby. To prevent unfastening, a collar 88 may be fitted between a support 87 and the female member 2, after the members 1 and 2 have been engaged.

Figure 22 shows a raising and lowering device for a music stand. The male member 1 is provided to a post 92 of a music stand 91, and at the upper end of a supporting structure 93 the female member 2 is provided. It is not necessary to unfasten and tighten every adjustment when raising and lowering (as in set screw types). Raising and lowering can be done by merely interengaging each line of the grooves and the threads of one of the members to each line of the ungrooved and the unthreaded portions of the other. After such adjustment, when the male member is engaged the music stand 91 is stopped at a certain position under load. This arrangement is applicable similarly to a desk, a chair or a microphone. However, in a heavyweight case such as large desks it is desirable to make one of the male and the female members rotatable.

According to the invention, a male and a female member are freely fitted in and drawn out each other, suiting each line of grooves and threads of one of the members to each line of non-grooved and non-threaded portions of the other. When the members are inter-fitted, if the members are relatively screwed, suiting a thread or threads of one of the members to a groove or grooves of the other, the members can be kept in engagement at a certain position. Therefore, the screw couplings of the invention can easily be used for connecting two articles or more and also can keep engaged against large loads.

## Claims

1. A screw coupling comprising a generally cylindrical male member (1) provided with a plurality of partial screw threads (4) thereupon, a generally cylindrical female member (2) provided with a plurality of co-operating partial screw threads (6) thereon; a longitudinal land (7, 8) formed between each of the partial screw threads of the male and female members, to provide means whereby the male and female members can be slid axially into co-operation, and stop means (11) to prevent relative rotational movement beyond the desired amount; characterised in that urging means (21) are provided to urge the male and female members axially apart.

2. A coupling according to Claim 1 characterised in that the co-operating screw threads (4, 6') are longitudinally arranged in one or more lines equally spaced about the axis, each thread having a plane which is at right angles to said axis.

3. A coupling according to Claim 1 or Claim 2 characterised in that each set of screw threads (3'', 4'', 5'', 6'') has two or more elements, and in that the sitting positions of these elements can be rotated by an amount of less than a full turn to achieve fine axial displacement.

4. A coupling according to any preceding claim characterised in that each screw thread is provided with a guide plane (59') formed at the entrance to a groove (5) at least on one of the male (1) or female (2) members.

5. A coupling according to any preceding claim characterised in that the outer face stop means (11) continues in the axial direction to provide a guide for the engagement of the male and female members.

6. A coupling according to any preceding claim characterised in that the relative shapes of the screw threads (3'', 6'') co-operate to provide both screw threads and stop means.

7. A coupling according to any preceding claim characterised in that these screw threads (3''a, 5''a) have a trapezoidal, square, rectangular, or semi-circular cross section.

8. A coupling according to Claim 7 characterised in that the cross section reduces towards the remote ends of each thread.

9. A coupling according to any preceding claim characterised in that the male member passes completely through the female member.

## Patentansprüche

1. Schraubkupplung mit einem im wesentlichen zylindrischen Stangenteil (1), das mit einer Mehrzahl von Schraubenwindungsabschnitten (4) auf seiner Außenseite versehen ist, einem im wesentlichen zylindrischen Hülsenteil (2), das mit einer Mehrzahl von Schraubenwindungsabschnitten (6) auf seiner Innenseite versehen ist, die den Schraubenwindungsabschnitten des Stangenteiles entsprechen, je einer Längsfläche (7, 8) zwischen jedem der Schraubenwindungsabschnitte des Stangenteiles und des Hülsenteiles, wodurch ein Mittel besteht, mittels dessen Stangenteil und Hülsenteil in axialen Verstellbewegungen zusammenwirken können und mit einem Anschlagmittel (11) zur Verhinderung von Drehbewegungen zwischen Stangenteil und Hülsenteil über ein bestimmtes Maß hinaus, gekennzeichnet durch ein Wirkmittel (21), das Stangenteil und Hülsenteil in axialer Richtung voneinander entfernt zu halten sucht.

2. Kupplung nach Anspruch 1, dadurch gekennzeichnet, daß die miteinander zusammenwirkenden Schraubengewinde (4, 6') in einer oder mehreren Reihen in Längsrichtung angeordnet sind, wobei die Schraubengewindereihen in Umfangsrichtung gleiche Abstände voneinander haben und wobei jedes Gewinde eine Ebene aufweist, die rechtwinklig zu der Achse liegt, um die herum die Schraubengewinde angeordnet sind.

3. Kupplung nach Anspruch 1 oder Anspruch 2, dadurch gekennzeichnet, daß jeder Satz der Schraubengewinde (3'', 4'', 5'', 6'') zwei oder mehr Elemente einschließt und daß die Sitzpositionen dieser Elemente um einen Betrag drehbar sind, der kleiner ist als eine volle Umdrehung, um die axialen Endverstellungen zu erhalten.

4. Kupplung nach einem der vorhergehenden Ansprüche, dadurch gekennzeichnet, daß jedes Schraubengewinde zumindest des Stangenteiles (1) oder des Hülsenteiles (2) mit einer Führungsebene (59') am Eingang zu einer Nut (5) versehen ist.

5. Kupplung nach einem der vorhergehenden Ansprüche, dadurch gekennzeichnet, daß die Außenfläche des Anschlagmittels (11) in axialer Richtung verlängert ist, um eine Führung zum Zusammenwirken von Stangenteil und Hülsenteil zu bilden.

6. Kupplung nach einem der vorhergehenden Ansprüche, dadurch gekennzeichnet, daß die einander zugeordneten Konturen der Schraubengewinde (3'', 6'') zusammenwirken, um sowohl die Schraubengewinde als auch das Anschlagmittel zu ergeben.

7. Kupplung nach einem der vorhergehenden Ansprüche, dadurch gekennzeichnet, daß diese Schraubengewinde (3''a, 5''a) einen trapezförmigen, quadratischen, rechteckigen oder halbkreisförmigen Querschnitt haben.

8. Kupplung nach Anspruch 7, dadurch gekennzeichnet, daß der Gewindequerschnitt gegen das äußere Ende jedes Gewindes hin kleiner wird.

9. Kupplung nach einem der vorhergehenden Ansprüche, dadurch gekennzeichnet, daß das Stangenteil das Hülsenteil vollständig durchdringt.

**Revendications**

1. Accouplement à vis, comprenant un élément mâle (1) de forme générale cylindrique sur lequel sont ménagés plusieurs filets de vis partiels (4), un élément femelle (2) de forme générale cylindrique sur lequel sont ménagés plusieurs filets de vis partiels (6) coopérant avec les premiers, une plage longitudinale (7, 8) ménagée entre chacun des filets de vis partiels des éléments mâle et femelle à titre de moyens permettant de mettre les éléments mâle et femelle en coopération l'un avec l'autre par coulissement axial, et des moyens d'arrêt (11) pour empêcher un mouvement de rotation relatif au-delà de l'angle désiré, caractérisé en ce que des moyens de sollicitation (21) sont prévus pour solliciter les éléments mâle et femelle de façon à les écarter axialement l'un de l'autre.

2. Accouplement conforme à la revendication 1, caractérisé en ce que les filets de vis qui coopèrent entre eux (4, 6') sont disposés longitudinalement en une ou plusieurs lignes également espacées autour de l'axe, chaque filet ayant un plan qui est perpendiculaire à cet axe.

3. Accouplement conforme à la revendication 1 ou à la revendication 2, caractérisé en ce que chaque ensemble de filet de vis (3'', 4'', 5'', 6'') comporte au moins deux éléments, et en ce que l'on peut faire tourner les positions d'assise de ces éléments d'un angle inférieur à un tour complet pour effectuer un déplacement axial fin.

4. Accouplement conforme à l'une des revendications précédentes, caractérisé en ce que chaque filet de vis est muni d'un plan de guidage (5a') ménagé à l'entrée d'une rainure (5) sur au moins un des éléments mâle (1) ou femelle (2).

5. Accouplement conforme à l'une des revendications précédentes, caractérisé en ce que la face extérieure des moyens d'arrêt (11) est prolongée dans le sens axial pour constituer un guide pour l'engagement des éléments mâle et femelle.

6. Accouplement conforme à l'une des revendications précédentes, caractérisé en ce que les formes relatives des filets de vis (3'', 6'') coopèrent pour constituer à la fois des filets de vis et des moyens d'arrêt.

7. Accouplement conforme à l'une des revendications précédentes, caractérisé en ce que ces filets de vis (3''a, 5''a) comportent une section transversale trapézoïdale, carrée, rectangulaire ou semicirculaire.

8. Accouplement conforme à la revendication 7, caractérisé en ce que la section transversale se réduit en direction de l'extrémité éloignée de chaque filet.

9. Accouplement conforme à l'une des revendications précédentes, caractérisé en ce que l'élément mâle traverse complètement l'élément femelle.

0 121 619

F I G. 1

F I G. 2

F I G. 3

F I G. 4

F I G. 5

1

# F I G. 6

# F I G. 7

0 121 619

FIG. 8

FIG. 9

FIG. 10

FIG. 11

FIG. 12

3

# F I G. 16

## F I G. 13

## F I G. 14

## F I G. 15

# F I G. 17

# F I G. 18

# F I G. 19

5

# FIG. 20

# FIG. 21

# FIG. 22